# EUROPÄISCHE PATENTSCHRIFT

(11) **EP 3 148 121 B1**
(45) Veröffentlichungstag und Bekanntmachung des Hinweises auf die Patenterteilung: **08.11.2017**
(21) Anmeldenummer: 15186611.8
(22) Anmeldetag: 24.09.2015
(51) Int. Cl.: H04L 12/40, H04L 12/24

(54) **VERFAHREN ZUM HINZUFÜGEN ODER ZUM ENTFERNEN EINER STEUERUNG IN EIN/AUS EINEM NETZWERK UND VORRICHTUNG ZUM DURCHFÜHREN DER VERFAHREN**
METHOD FOR ADDING OR FOR REMOVING A CONTROLLER TO/FROM A NETWORK AND DEVICE FOR IMPLEMENTING THE METHOD
PROCEDE D'INSERTION OU D'ENLEVEMENT D'UNE COMMANDE DANS UN RESEAU ET DISPOSITIF D'EXECUTION DU PROCEDE

(43) Veröffentlichungstag der Anmeldung: 29.03.2017
(73) Patentinhaber: SICK AG, 79183 Waldkirch (DE)
(72) Erfinder: Saumer, Herr Markus, 77948 Friesenheim (DE); Weddingfeld, Herr Klaus, 79183 Waldkirch (DE)

(56) Entgegenhaltungen:
- WO-A1-2011/002397
- DE-A1-102011 086 054
- US-A1- 2004 133 721

## Beschreibung

Die Erfindung betrifft ein Verfahren zum Hinzufügen einer Steuerung in ein Netzwerk gemäß dem Anspruch 1 und ein Verfahren zum Entfernen einer Steuerung aus einem Netzwerk gemäß dem Anspruch 5 sowie eine Vorrichtung zum Durchführen der Verfahren gemäß dem Anspruch 9.

In der heutigen Automatisierungsindustrie wird eine Gesamtanlage aus einer Vielzahl von Modulen erstellt, wobei jedes Modul zumindest eine Steuerung und zumindest einen Aktor aufweist. Durch den modularen Aufbau der Anlage kann eine Änderung der Anlage einfach und zeitsparend durchgeführt werden.

Die Steuerungen steuern derart die Aktoren, so dass die Aktoren ihre zugeordnete Aufgabe durchführen und gegebenenfalls miteinander interagieren. Hierzu sind die Steuerungen über ein Kommunikationsnetzwerk, vorzugsweise ein auf Ethernet basiertes Netzwerk, miteinander verbunden. Das Kommunikationsnetzwerk kann durch eine übergeordnete zentrale Steuerung gesteuert werden oder durch eine Linienvernetzung der beteiligten Steuerungen aufgebaut sein, d.h. die beteiligten Steuerungen sind in einer Kommunikationslinie (Line Konzept) miteinander verbunden.

Bei der Erstellung oder der Änderung der Gesamtanlage muss die gesamte Anlage entsprechend dem automatisierten Ablaufprozess programmiert bzw. neu konfiguriert werden.

Bei einer zentralen Steuerung des Kommunikationsnetzwerks muss ein Maximalausbau bzw. alle unterschiedlichen Modulzusammenstellungen der Gesamtanlage bekannt und in der zentralen Steuerung hinterlegt sein. Eine Änderung der Gesamtanlage, zum Beispiel durch Hinzufügen einer weiteren Steuerung bzw. durch Entfernen einer bestehenden Steuerung, erfordert eine Unterbrechung der Kommunikation der Gesamtanlage, damit die geänderten Kommunikationswege in dem Kommunikationsnetzwerk in der zentralen Steuerung implementiert werden können.

Bei einer Linienvernetzung der beteiligten Steuerungen erfordert eine Änderung im Aufbau der Gesamtanlage, zum Beispiel durch Hinzufügen einer weiteren Steuerung bzw. durch Entfernen einer bestehenden Steuerung, ebenfalls eine Unterbrechung der Kommunikation der Gesamtanlage. Hierbei kann eine Anpassung der Verkabelung der Kommunikationslinie erforderlich sein. Ferner müssen die benachbarten Steuerungen der hinzugefügten Steuerung bzw. der entfernten Steuerung bezüglich ihrer Kommunikation in der Kommunikationslinie neu eingelernt werden. In diesem Zusammenhang, offenbart die Patentschrift US2004/133721 A1 ein Verfahren zum Einrichten einer Kommunikation zwischen einer Bussteuereinheit und Netzwerkvorrichtungen über ein Netzwerk, wobei die Kommunikation zwischen der Bussteuereinheit und den Netzwerkvorrichtungen durch einen Befehlsablaufplan dargestellt ist. Es ist daher eine Aufgabe der Erfindung, ein Verfahren zum Hinzufügen einer Steuerung in ein Netzwerk bzw. ein Verfahren zum Entfernen einer Steuerung aus einem Netzwerk zur Verfügung zu stellen, das das Hinzufügen bzw. das Entfernen ohne eine Unterbrechung der laufenden Kommunikation der Kommunikationslinie ermöglicht. Ferner ist es eine Aufgabe der Erfindung eine Steuerung zum Durchführen eines Verfahrens zum Hinzufügen einer Steuerung in ein Netzwerk bzw. eines Verfahrens zum Entfernen einer Steuerung aus einem Netzwerk zur Verfügung zu stellen, die das durchführen der Verfahren ohne eine Unterbrechung der laufenden Kommunikation der Kommunikationslinie ermöglicht.

Die Aufgabe wird erfindungsgemäß gelöst durch ein Verfahren zum Hinzufügen einer Steuerung in ein Netzwerk von zumindest einer ersten und zweiten Steuerung, die zum Betreiben von Aktoren vorgesehen sind, während eines Betriebs des Netzwerks, wobei die erste und zweite Steuerung in einer Kommunikationslinie miteinander verbunden sind und über eine erste Sendeverbindung der ersten Steuerung und eine zweite Sendeverbindung der zweiten Steuerung miteinander kommunizieren, und wobei jede Steuerung eine eindeutige Kennung aufweist, mit den Schritten Vorsehen einer dritten Sendeverbindung und einer vierten Sendeverbindung zwischen der hinzuzufügenden Steuerung und der die hinzuzufügende Steuerung vorzuschaltenden ersten Steuerung, Vorsehen einer fünften Sendeverbindung und einer sechsten Sendeverbindung zwischen der hinzuzufügenden Steuerung und der die hinzuzufügende Steuerung nachzuschaltenden zweiten Steuerung, und Aktivieren der dritten bis sechsten Sendeverbindungen zwischen der ersten, zweiten und hinzuzufügenden Steuerung beim gleichzeitigen Deaktivieren der ersten und zweiten Sendeverbindung zwischen der ersten und zweiten Steuerung.

Gemäß einem bevorzugten Ausführungsbeispiel werden jeweils ein drittes und viertes Kennungspaar für die Sendeverbindungen zwischen der hinzuzufügenden Steuerung und der ersten Steuerung aus den jeweiligen Kennungen der hinzuzufügenden und ersten Steuerung definiert.

Gemäß einem weiteren bevorzugten Ausführungsbeispiel werden das dritte und vierte Kennungspaar in der hinzuzufügenden und der ersten Steuerung abgespeichert. Dies hat den Vorteil, dass über die definierten Kennungspaare die Kommunikationsverbindungen für die in der Kommunikationslinie verbundenen Steuerungen eindeutig sind.

Gemäß einem weiteren bevorzugten Ausführungsbeispiel werden jeweils ein fünftes und sechstes Kennungspaar für die Sendeverbindungen zwischen der hinzuzufügenden Steuerung und der zweiten Steuerung aus den jeweiligen Kennungen der hinzuzufügenden und zweiten Steuerung definiert. Vorteilhafterweise werden das fünfte und sechste Kennungspaar in der hinzuzufügenden und der zweiten Steuerung abgespeichert.

Hieraus ergibt sich der Vorteil, dass die Kommunikationsverbindungen zwischen der hinzuzufügenden Steuerung und der vorgeschalteten Steuerung bzw. der nachgeschalteten Steuerung über die definierten Kennungspaare eindeutig bestimmbar sind.

Die Aufgabe wird erfindungsgemäß ferner gelöst durch ein Verfahren zum Entfernen einer Steuerung aus einem Netzwerk von zumindest einer ersten und zweiten Steuerung und der zu entfernenden Steuerung, die zum Betreiben von Aktoren vorgesehen sind, während eines Betriebs des Netzwerks, wobei die Steuerungen in einer Kommunikationslinie miteinander verbunden sind, die zu entfernende Steuerung zwischen der ersten und zweiten Steuerung angeordnet ist, die erste Steuerung über eine dritte Sendeverbindung mit der zu entfernenden Steuerung verbunden ist, die zu entfernende Steuerung über eine vierte Sendeverbindung mit der ersten Steuerung und über eine fünfte Sendeverbindung mit der zweiten Steuerung verbunden ist und die zweite Steuerung über eine sechste Sendeverbindung mit der zu entfernenden Steuerung verbunden ist, und wobei jede Steuerung eine eindeutige Kennung aufweist, mit den Schritten Vorsehen einer ersten Sendeverbindung und einer zweiten Sendeverbindung zwischen der ersten und zweiten Steuerung, und Aktivieren der ersten und zweiten Sendeverbindung zwischen der ersten und zweiten Steuerung beim gleichzeitigen Deaktivieren der dritten bis sechsten Sendeverbindungen zwischen der zu entfernenden Steuerung und der die zu entfernende Steuerung vorgeschalteten ersten Steuerung und der die zu entfernende Steuerung nachgeschalteten zweiten Steuerung.

Gemäß einem bevorzugten Ausführungsbeispiel werden jeweils ein erstes und zweites Kennungspaar für die erste und zweite Sendeverbindung aus den jeweiligen Kennungen der ersten und zweiten Steuerung definiert.

Gemäß einem weiteren bevorzugten Ausführungsbeispiel werden das erste und zweite Kennungspaar in der ersten und zweiten Steuerung abgespeichert.

Die Aufgabe wird weiterhin erfindungsgemäß gelöst durch eine Steuerung zum Durchführen eines der obigen Verfahren, wobei die Steuerung in einem Netzwerk mit Steuerungen einfügbar oder entfernbar ist, umfassend eine Eingangs- und Ausgangseinheit zum Kommunizieren mit zumindest einer weiteren Steuerung, und eine Rechnereinheit zum Erkennen einer Kennung der weiteren Steuerung und zum Erstellen einer Sendeverbindung mit der weiteren Steuerung, wobei die Rechnereinheit ein Kennungspaar aus einer eigenen Kennung und der Kennung der weiteren Steuerung für die Sendeverbindung erstellt und das erstellte Kennungspaar in einer Speichereinheit abspeichert, und wobei die Rechnereinheit vorgesehen ist, zum Aktivieren oder Deaktivieren der Sendeverbindung zu der weiteren Steuerung während eines Betriebs des Netzwerks.

Gemäß einem bevorzugten Ausführungsbeispiel ist die Steuerung an einem auf Ethernet basierten Switch anschließbar und über den Switch mit der weiteren Steuerung verbindbar.

Gemäß einem weiteren bevorzugten Ausführungsbeispiel kommuniziert die Rechnereinheit eine Bereitschaft zum Aktivieren der Sendeverbindungen nach der Erstellung derselben oder eine Bereitschaft zum Deaktivieren der Sendeverbindungen zu der anderen Steuerung.

Das erfindungsgemäße Verfahren und die Steuerung können auf ähnliche Weise durch weitere Merkmale ausgestaltet werden und zeigen dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer Kommunikationslinie einer Automatisierungsanlage,
- Fig. 2, 3: eine schematische Darstellung eines erfindungsgemäßen Hinzufügens einer Steuerung in die Kommunikationslinie der Automatisierungsanlage,
- Fig. 4, 5: eine schematische Darstellung eines erfindungsgemäßen Entfernens einer Steuerung aus der Kommunikationslinie der Automatisierungsanlage.

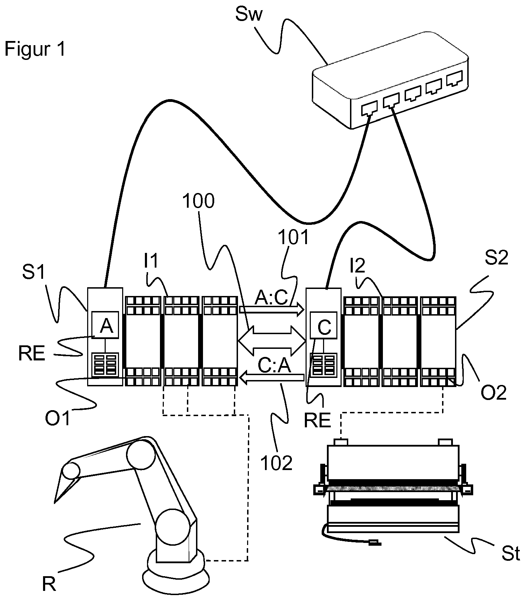

Die Figur 1 zeigt schematisch eine Automatisierungsanlage, die aus einer ersten Steuerung S1 und einer zweiten Steuerung S2 und aus einem von der ersten Steuerung S1 angesteuerten ersten Aktor und einem von der zweiten Steuerung S2 angesteuerten zweiten Aktor aufgebaut ist. Die erste Steuerung S1 steuert den, beispielhaft als Roboterarm R dargestellten, ersten Aktor an. Die zweite Steuerung S2 steuert den, beispielhaft als Stanze St dargestellten, zweiten Aktor an.

Die erste und zweite Steuerung S1 und S2 sind in einer Kommunikationslinie 100 miteinander verbunden und kommunizieren mittels einer ersten Sendeverbindung 101 und einer zweiten Sendeverbindung 102. Hierbei kommuniziert die erste Steuerung S1 mittels der ersten Sendeverbindung 101 mit der zweiten Steuerung S2. Die zweite Steuerung S2 kommuniziert mittels der zweiten Sendeverbindung 102 mit der ersten Steuerung S1.

Die erste und zweite Steuerung S1 und S2 weisen jeweils eine eindeutige Kennung auf. Die erste Steuerung S1 hat die Kennung A und die zweite Steuerung S2 hat die Kennung C. Die Kennung dient den Steuerungen S1 und S2 als Adressierung zur Identifizierung der Steuerungen S1 und S2 in der Kommunikationslinie 100, so dass mittels der Kennung vorzugsweise die Position und die Aufgabe der zugehörigen Steuerungen S1 und S2 in der Kommunikationslinie 100 mitgeteilt werden können. D.h. mit der Kennung A und C ist die Reihenfolge der Steuerungen S1 und S2 in der Kommunikationslinie 100 eindeutig bestimmt, so dass ein Netzwerk aus den ersten und zweiten Steuerungen S1 und S2 gebildet ist.

Jede Steuerung S1 und S2 weist eine Eingangseinheit I1 und I2 und eine Ausgangseinheit O1 und O2 auf, um miteinander zu kommunizieren. Ferner weist jede Steuerung S1 und S2 eine Rechnereinheit RE auf, die zum Erkennen der Kennung A und C der verbundenen Steuerung S1 und S2 dient. Die Rechnereinheit RE erstellt aus den Kennungen A und C der verbundenen Steuerungen S1 und S2 der Kommunikationslinie 100 für die Sendeverbindungen 101 der ersten Steuerung S1 ein erstes Kennungspaar A:C und für die Sendeverbindung 102 der zweiten Steuerung S2 ein zweites Kennungspaar C:A. Die Rechnereinheit RE speichert die erstellten Kennungspaare A:C und C:A in einer Speichereinheit der jeweiligen ersten und zweiten Steuerung S1 und S2, so dass die erste und zweite Sendeverbindung 101 und 102 der Steuerungen S1 und S2 bekannt und eindeutig zuordenbar sind.

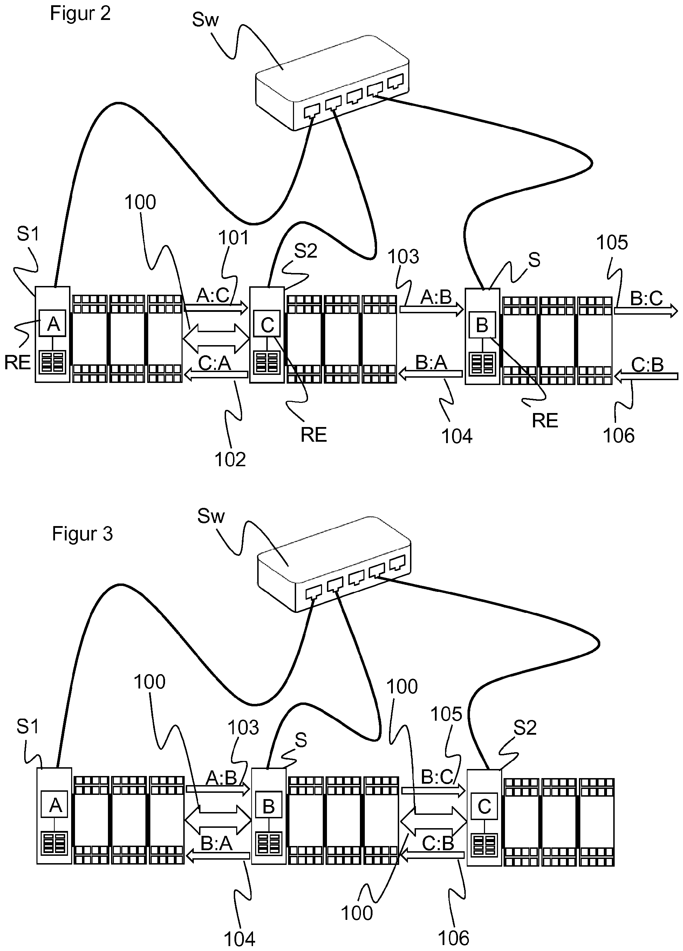

In der Figur 2 wird schematisch ein erfindungsgemäßes Hinzufügen einer hinzuzufügenden Steuerung S in die beschriebene Kommunikationslinie 100 zwischen der ersten und zweiten Steuerung S1 und S2 gezeigt. Die hinzuzufügende Steuerung S weist eine Kennung B auf.

Das erfindungsgemäße Verfahren sieht für die hinzuzufügende Steuerung S eine vierte Sendeverbindung 104 vor, die eine Kommunikation der hinzuzufügenden Steuerung S zu der ersten Steuerung S1 ermöglichen soll. Eine dritte Sendeverbindung 103 zwischen der hinzuzufügenden Steuerung S und der ersten Steuerung S1 wird vorgesehen, wobei über die dritte Sendeverbindung 103 die erste Steuerung S1 mit der hinzuzufügenden Steuerung S kommunizieren kann.

Die Rechnereinheit RE der Steuerungen S1 und S erstellt aus den Kennungen der ersten und hinzuzufügenden Steuerung S1 und S für die jeweiligen Sendeverbindungen 103 und 104 ein entsprechendes Kennungspaar A:B und B:A. D.h. für die dritte Sendeverbindung 103 speichert die Rechnereinheit RE ein drittes Kennungspaar, das A:B lautet, in die Speichereinheit ab. Für die vierte Sendeverbindung 104 speichert die Rechnereinheit RE ein viertes Kennungspaar, das B:A lautet, in die Speichereinheit ab.

Mittels der Kennungspaare A:B und B:A lassen sich die dritte und vierte Sendeverbindung 103 und 104 für die erste und hinzuzufügende Steuerung S1 und S in dem Netzwerk eindeutig zuordnen.

Weiterhin sieht das erfindungsgemäße Verfahren eine fünfte Sendeverbindung 105 für die hinzuzufügende Steuerung S vor, die eine Kommunikation der hinzuzufügenden Steuerung S zu der zweiten Steuerung S2 ermöglichen soll. Aus den jeweiligen Kennungen B und C erstellt die Rechnereinheit RE ein fünftes Kennungspaar, das B:C lautet, für die fünfte Sendeverbindung 105 und speichert dieses in die Speichereinheit der hinzuzufügenden Steuerung S ab.

Eine sechste Sendeverbindung 106 zwischen der hinzuzufügenden Steuerung S und der zweiten Steuerung S2 wird vorgesehen, über die die zweite Steuerung S2 mit der hinzuzufügenden Steuerung S kommunizieren kann. Aus der Kennung B und C der zu verbindenden Steuerungen S2 und S erstellt die Rechnereinheit RE ein sechstes Kennungspaar, das C:B lautet, und speichert dieses in die Speichereinheit der hinzuzufügenden Steuerung S ab.

Nach der Erstellung der dritten bis sechsten Sendeverbindungen 103 bis 106 sind die notwendigen Verbindungen für die Kommunikationslinie 100 aufgebaut und ein Hinzufügen der hinzuzufügenden Steuerung S zwischen der ersten und zweiten Steuerung S1 und S2 ist möglich.

Eine Bereitschaft des Hinzufügens der hinzuzufügenden Steuerung S in die Kommunikationslinie 100 wird vorteilhafterweise von der hinzuzufügenden Steuerung S kommuniziert, so dass während des Betriebs des Netzwerks die dritte bis sechste Sendeverbindungen 103 bis 106 zwischen der ersten, zweiten und hinzuzufügenden Steuerung S1, S2 und S aktiviert werden und die bestehende erste und zweite Sendeverbindung 101 und 102 zwischen der ersten und zweiten Steuerung S1 und S2 deaktiviert werden.

Durch das gleichzeitige Aktivieren der neu vorgesehenen Sendeverbindungen 103 bis 106 und Deaktivieren der bestehenden Sendeverbindungen 101 und 102 wird, wie in Figur 3 gezeigt, die hinzuzufügende Steuerung S ohne eine Kommunikationsunterbrechung des Netzwerks zwischen der ersten und zweiten Steuerung S1 und S2 hinzugefügt.

Durch die abgespeicherten Kennungspaare der Sendeverbindungen 101 bis 106 sind die Sendeverbindungen 101 bis 106 für alle verbundenen Steuerungen S1, S2 und S eindeutig zuordenbar.

Gemäß dem erfindungsgemäßen Verfahren ist das Netzwerk nicht auf zwei Steuerungen S1 und S2 beschränkt. Das Netzwerk kann eine Vielzahl von Steuerungen aufweisen, die an eine auf Ethernet basierte Kommunikationslinie, insbesondere in Reihe geschaltet, verbunden sind.

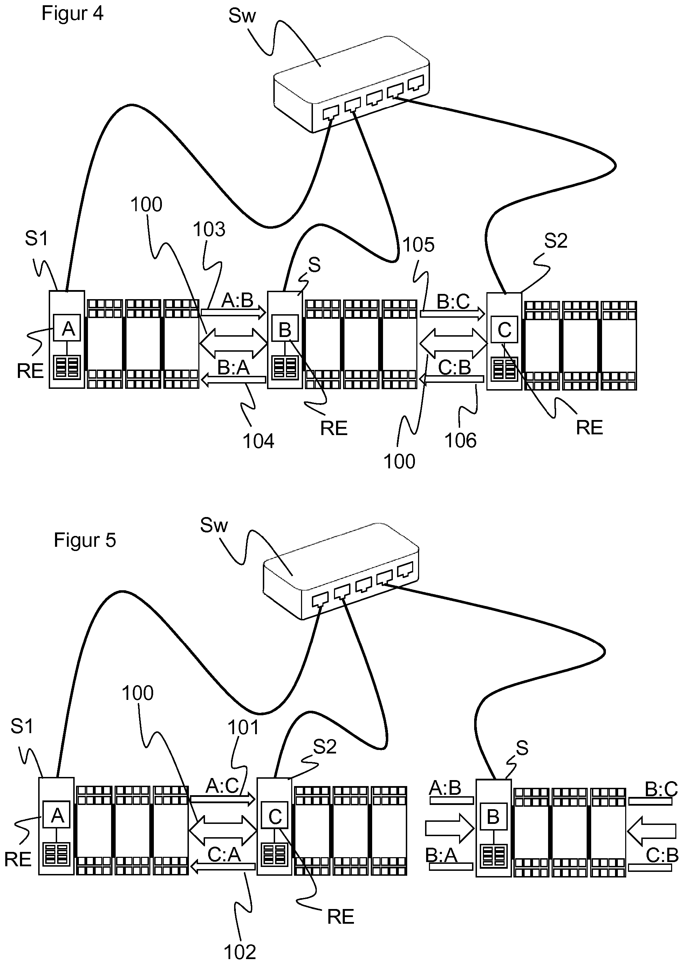

Die Figur 4 zeigt eine alternative Ausgestaltung des erfindungsgemäßen Verfahrens zum Entfernen einer Steuerung aus einem Netzwerk von drei Steuerungen einer Automatisierungsanlage. Hierbei ist das erfindungsgemäße Verfahren nicht auf die Anzahl von drei Steuerungen in dem Netzwerk beschränkt. Die Anzahl der angeschlossenen Steuerungen kann beliebig hoch sein.

Die der Automatisierungsanlage zugehörigen Aktoren sind aus Übersichtlichkeitsgründen nicht dargestellt und die gleichen Komponenten zu den vorherigen Figuren weisen die gleichen Bezugszeichen auf.

Die dargestellte Automatisierungsanlage weist drei Steuerungen auf, die in Reihe an einer Kommunikationslinie 100 angeschlossen sind. Die erste Steuerung S1 weist eine dritte Sendeverbindung 103 zu der zu entfernenden Steuerung S auf, über die die erste Steuerung S1 mit der zu entfernenden Steuerung S kommuniziert. Die zu entfernende Steuerung S weist eine vierte Sendeverbindung 104 zu der ersten Steuerung S1 auf, über die die zu entfernende Steuerung S mit der ersten Steuerung S1 kommuniziert.

Die Rechnereinheit RE erstellt aus den Kennungen A und B der ersten und zu entfernenden Steuerung S1 und S für die dritte und vierte Sendeverbindung 103 und 104 jeweils ein drittes und viertes Kennungspaar, wobei das dritte Kennungspaar A:B und das vierte Kennungspaar B:A lauten. Die Kennungspaare A:B und B:A sind in den jeweiligen Steuerungen S1 und S abgespeichert.

Die zu entfernende Steuerung S weist ferner eine fünfte Sendeverbindung 105 zu der zweiten Steuerung S2 auf, über die die zu entfernende Steuerung S mit der zweiten Steuerung S2 kommuniziert. Auf der anderen Seite weist die zweite Steuerung S2 eine sechste Sendeverbindung 106 zu der zu entfernenden Steuerung S auf, über die die zweite Steuerung S2 mit der zu entfernenden Steuerung S kommuniziert.

Die Rechnereinheit RE erstellt aus den Kennungen B und C der zweiten und zu entfernenden Steuerung S2 und S für die fünfte und sechste Sendeverbindung 105 und 106 jeweils ein fünftes und sechstes Kennungspaar, wobei das fünfte Kennungspaar B:C und das sechste Kennungspaar C:B lauten. Die Kennungspaare B:C und C:B sind in den jeweiligen Steuerungen S2 und S abgespeichert.

Über die vorgesehenen Sendeverbindungen 103 bis 106 bilden die erste, zweite und zu entfernende Steuerungen S1, S2 und S die Kommunikationslinie 100 der Automatisierungsanlage.

Bei einer Änderung der Automatisierungsanlage durch Entfernen der zu entfernenden Steuerung S aus der Kommunikationslinie 100 sieht das erfindungsgemäße Verfahren vor, dass die erste Steuerung S1 eine erste Sendeverbindung 101 zu der zweiten Steuerung S2 aufbaut, wobei die aufgebaute erste Sendeverbindung 101 inaktiv für die Kommunikationslinie 100 ist. Weiterhin wird eine zweite Sendeverbindung 102 von der zweiten Steuerung S2 zu der ersten Steuerung S1 durch das erfindungsgemäße Verfahren vorgesehen. Auch die zweite Sendeverbindung 102 bleibt für die Kommunikationslinie 100 zunächst inaktiv.

Die Rechnereinheit RE erstellt aus den Kennungen A und C der ersten und zweiten Steuerung S1 und S2 für die jeweilige erste und zweite Sendeverbindung 101 und 102 ein entsprechendes erstes und zweites Kennungspaar, wobei das erste Kennungspaar A:C lautet und das zweite Kennungspaar C:A lautet. Das erste und zweite Kennungspaar A:C und C:A werden in der ersten und zweiten Steuerung S1 und S2 abgespeichert.

Nach der Erstellung der ersten und zweiten Sendeverbindung 101 und 102 zwischen der ersten und zweiten Steuerung S1 und S2 kann ein Entfernen der zu entfernenden Steuerung S während eines laufenden Betriebs der Kommunikationslinie 100 des Netzwerks durchgeführt werden. Hierzu werden die erste und zweite Sendeverbindung 101 und 102 zwischen der ersten und zweiten Steuerung S1 und S2 aktiviert, wobei gleichzeitig die dritte bis sechste Sendeverbindung 103 bis 106 zwischen der zu entfernenden Steuerung S und der die zu entfernende Steuerung S vorgeschalteten ersten Steuerung S1 und der die zu entfernende Steuerung S nachgeschalteten zweiten Steuerung S2 deaktiviert werden.

Die zu entfernende Steuerung S ist somit aus der Kommunikationslinie 100 des Netzwerks entfernt. Die Kommunikation zwischen der ersten und zweiten Steuerung S1 und S2 der verbleibenden Kommunikationslinie 100 des Netzwerks bleibt über die erste und zweite Sendeverbindung 101 und 102 ohne Unterbrechung aufrecht.

Die erfindungsgemäßen Verfahren zum Hinzufügen oder zum Entfernen einer Steuerung S sind insbesondere als Programme in den Steuerungen S1, S2 und S hinterlegt bzw. abgespeichert. Vorzugsweise sind die Steuerungen S1, S2 und S an einem auf Ethernet basierten Switch Sw angeschlossen und über den Switch Sw miteinander verbunden.

Mittels eines Signals über den Switch Sw kann die hinzuzufügende oder zu entfernende Steuerung S ihre Aufnahme in die Kommunikationslinie 100 oder ihr Entfernen aus der Kommunikationslinie 100 des Netzwerks an die erste und zweite Steuerung S1 und S2 kommunizieren, so dass das entsprechende erfindungsgemäße Verfahren aktiviert werden kann.

### Bezugszeichenliste

- 100: Kommunikationslinie
- 101: erste Sendeverbindung
- 102: zweite Sendeverbindung
- 103: dritte Sendeverbindung
- 104: vierte Sendeverbindung
- 105: fünfte Sendeverbindung
- 106: sechste Sendeverbindung
- A, B, C: Kennung der Steuerungen
- A:B: drittes Kennungspaar
- A:C: erstes Kennungspaar
- B:A: viertes Kennungspaar
- B:C: fünftes Kennungspaar
- C:A: zweites Kennungspaar
- C:B: sechstes Kennungspaar
- I1, I2: Eingangseinheit
- O1, O2: Ausgangseinheit
- R: Roboter
- RE: Rechnereinheit
- S: hinzuzufügende oder zu entfernende Steuerung
- S1: erste Steuerung
- S2: zweite Steuerung
- St: Stanze
- Sw: Switch

## Patentansprüche

1. Verfahren zum Hinzufügen einer Steuerung (S) in ein Netzwerk von zumindest einer ersten und zweiten Steuerung (S1, S2), die zum Betreiben von Aktoren (R, St) vorgesehen sind, während eines Betriebs des Netzwerks, wobei die erste und zweite Steuerung (S1, S2) in einer Kommunikationslinie (100) miteinander verbunden sind und über eine erste Sendeverbindung (101) der ersten Steuerung (S1) und eine zweite Sendeverbindung (102) der zweiten Steuerung (S2) miteinander kommunizieren, und wobei jede Steuerung (S1, S2, S) eine eindeutige Kennung (A, C, B) aufweist, mit den Schritten:
Vorsehen einer dritten Sendeverbindung (103) und einer vierten Sendeverbindung (104) zwischen der hinzuzufügenden Steuerung (S) und der die hinzuzufügende Steuerung (S) vorzuschaltenden ersten Steuerung (S1),
Vorsehen einer fünften Sendeverbindung (105) und einer sechsten Sendeverbindung (106) zwischen der hinzuzufügenden Steuerung (S) und der die hinzuzufügende Steuerung (S) nachzuschaltenden zweiten Steuerung (S2), und
Aktivieren der dritten bis sechsten Sendeverbindungen (103 - 106) zwischen der ersten, zweiten und hinzuzufügenden Steuerung (S1, S2, S) beim gleichzeitigen Deaktivieren der ersten und zweiten Sendeverbindung (101, 102) zwischen der ersten und zweiten Steuerung (S1, S2).

2. Verfahren nach Anspruch 1, wobei jeweils ein drittes und viertes Kennungspaar (A:B, B:A) für die Sendeverbindungen (103, 104) zwischen der hinzuzufügenden Steuerung (S) und der ersten Steuerung (S1) aus den jeweiligen Kennungen (A, B) der hinzuzufügenden und ersten Steuerung (S, S1) definiert werden.

3. Verfahren nach Anspruch 2, wobei das dritte und vierte Kennungspaar (A:B, B:A) in der hinzuzufügenden und der ersten Steuerung (S, S1) abgespeichert werden.

4. Verfahren nach einem der vorhergehenden Ansprüche 1 bis 3, wobei jeweils ein fünftes und sechstes Kennungspaar (B:C, C:B) für die Sendeverbindungen (105, 106) zwischen der hinzuzufügenden Steuerung (S) und der zweiten Steuerung (S2) aus den jeweiligen Kennungen (B, C) der hinzuzufügenden und zweiten Steuerung (S, S2) definiert werden.

5. Verfahren nach Anspruch 4, wobei das fünfte und sechste Kennungspaar (B:C, C:B) in der hinzuzufügenden und der zweiten Steuerung (S, S2) abgespeichert werden.

6. Verfahren zum Entfernen einer Steuerung (S) aus einem Netzwerk von zumindest einer ersten und zweiten Steuerung (S1, S2) und der zu entfernenden Steuerung (S), die zum Betreiben von Aktoren (R, St) vorgesehen sind, während eines Betriebs des Netzwerks, wobei die Steuerungen (S1, S2, S) in einer Kommunikationslinie (100) miteinander verbunden sind, die zu entfernende Steuerung (S) zwischen der ersten und zweiten Steuerung (S1, S2) angeordnet ist, die erste Steuerung (S1) über eine dritte Sendeverbindung (103) mit der zu entfernenden Steuerung (S) verbunden ist, die zu entfernende Steuerung (S) über eine vierte Sendeverbindung (104) mit der ersten Steuerung (S1) und über eine fünfte Sendeverbindung (105) mit der zweiten Steuerung (S2) verbunden ist und die zweite Steuerung (S2) über eine sechste Sendeverbindung (106) mit der zu entfernenden Steuerung (S) verbunden ist, und wobei jede Steuerung (S1, S2, S) eine eindeutige Kennung (A, C, B) aufweist, mit den Schritten:
Vorsehen einer ersten Sendeverbindung (101) und einer zweiten Sendeverbindung (102) zwischen der ersten und zweiten Steuerung (S1, S2), und
Aktivieren der ersten und zweiten Sendeverbindung (101, 102) zwischen der ersten und zweiten Steuerung (S1, S2) beim gleichzeitigen Deaktivieren der dritten bis sechsten Sendeverbindungen (103 - 106) zwischen der zu entfernenden Steuerung (S) und der die zu entfernende Steuerung (S) vorgeschalteten ersten Steuerung (S1) und der die zu entfernende Steuerung (S) nachgeschalteten zweiten Steuerung (S2).

7. Verfahren nach Anspruch 6, wobei jeweils ein erstes und zweites Kennungspaar (A:C, C:A) für die erste und zweite Sendeverbindung (101, 102) aus den jeweiligen Kennungen (A, C) der ersten und zweiten Steuerung (S1, S2) definiert werden.

8. Verfahren nach Anspruch 7, wobei das erste und zweite Kennungspaar (A:C, C:A) in der ersten und zweiten Steuerung (S1, S2) abgespeichert werden.

9. Steuerung (S1, S2, S) zum Durchführen eines Verfahrens nach einem der Ansprüche 1 bis 8, wobei die Steuerung (S1, S2, S) in einem Netzwerk mit Steuerungen (S1, S2, S) einfügbar oder entfernbar ist, umfassend:
eine Eingangs- und Ausgangseinheit (I1, I2; O1, O2) zum Kommunizieren mit zumindest einer weiteren Steuerung (S1, S2, S), und
eine Rechnereinheit (RE) zum Erkennen einer Kennung (A, C, B) der weiteren Steuerung (S1, S2, S) und zum Erstellen einer Sendeverbindung (101 - 106) mit der weiteren Steuerung (S1, S2, S), wobei die Rechnereinheit (RE) ein Kennungspaar (A:C, C:A, A:B, B:A, B:C, C:B) aus einer eigenen Kennung (A, C, B) und der Kennung (A, C, B) der weiteren Steuerung (S1, S2, S) für die Sendeverbindung (101 - 106) erstellt und das erstellte Kennungspaar (A:C, C:A, A:B, B:A, B:C, C:B) in einer Speichereinheit abspeichert,
und wobei die Rechnereinheit (RE) vorgesehen ist, zum Aktivieren oder Deaktivieren der Sendeverbindung (101 - 106) zu der weiteren Steuerung (S1, S2, S) während eines Betriebs des Netzwerks.

10. Steuerung (S1, S2, S) nach Anspruch 9, wobei die Steuerung (S1, S2, S) an einem auf Ethernet basierten Switch (Sw) anschließbar und über den Switch (Sw) mit der weiteren Steuerung (S1, S2, S) verbindbar ist.

11. Steuerung (S1, S2, S) nach Anspruch 9 oder 10, wobei die Rechnereinheit (RE) eine Bereitschaft zum Aktivieren der Sendeverbindungen (101 - 106) nach der Erstellung derselben oder eine Bereitschaft zum Deaktivieren der Sendeverbindungen (101 - 106) zu der anderen Steuerung (S1, S2, S) kommuniziert.

## Claims

1. A method of adding a control (S) into a network of at least one first and one second control (S1, S2), which are provided for operating actuators (R, St), during an operation of the network, wherein the first and second controls (S1, S2) are connected to one another in a communication line (100) and communicate with one another via a first transmission connection (101) of the first control (S1) and a second transmission connection (102) of the second control (S2); and wherein each control (S1, S2, S) has an unambiguous identifier (A, C, B), the method comprising the steps of:
providing a third transmission connection (103) and a fourth transmission connection (104) between the control (S) to be added and the first control (S1) to be connected upstream of the control (S) to be added;
providing a fifth transmission connection (105) and a sixth transmission connection (106) between the control (S) to be added and the second control (S2) to be connected downstream of the control (S) to be added; and
activating the third to sixth transmission connections (103 - 106) between the first and second controls and the control (S1, S2, S) to be added on the simultaneous deactivation of the first and second transmission connections (101, 102) between the first and second controls (S1, S2).

2. The method in accordance with claim 1, wherein a respective third and fourth identifier pair (A:B, B:A) are defined for the transmission connections (103, 104) between the control (S) to be added and the first control (S1) from the respective identifiers (A, B) of the control to be added and the first control (S, S1).

3. The method in accordance with claim 2, wherein the third and fourth identifier pairs (A:B, B:A) are stored in the control to be added and in the first control (S, S1).

4. The method in accordance with one of the preceding claims 1 to 3, wherein a respective fifth and sixth identifier pair (B:C, C:B) are defined for the transmission connections (105, 106) between the control to be added and the second control (S, S2) from the respective identifiers (B, C) of the control to be added and the second control (S, S2).

5. The method in accordance with claim 4, wherein the fifth and sixth identifier pairs (B:C, C:B) are stored in the control to be added and in the second control (S, S2).

6. A method of removing a control (S) from a network of at least one first and one second control (S1, S2) and the control (S) to be removed, which are provided for operating actuators (R, St), during an operation of the network, wherein the controls (S1, S2, S) are connected to one another in a communication line (100); wherein the control (S) to be removed is arranged between the first and second controls (S1, S2); wherein the first control (S1) is connected to the control (S) to be removed via a third transmission connection (103); wherein the control (S) to be removed is connected to the first control (S1) via a fourth transmission connection (104) and to the second control (S2) via a fifth transmission connection (105); and wherein the second control (S2) is connected to the control (S) to be removed via a sixth transmission connection (106); and wherein each control has an unambiguous identifier (A, C, B), the method comprising the steps of:
providing a first transmission connection (101) and a second transmission connection (102) between the first and second controls (S1, S2); and
activating the first and second transmission connections (101, 102) between the first and second controls (S1, S2) on a simultaneous deactivation of the third to sixth transmission connections (103 - 106) between the control (S) to be removed and the first control (S1) connected upstream of the control (S) to be removed and the second control (S2) connected downstream of the control (S) to be removed.

7. The method in accordance with claim 6, wherein a respective first and second identifier pair (A:C, C:A) for the first and second transmission connections (101, 102) are identified from the respective identifiers (A, C) of the first and second controls (S1, S2).

8. The method in accordance with claim 7, wherein the first and second identifier pairs (A:C, C:A) are stored in the first and second controls (S1, S2).

9. A control (S1, S2, S) for carrying out a method in accordance with one of the claims 1 to 8, wherein the control (S1, S2, S) can be added into or removed from a network having controls (S1, S2, S), the control comprising:
an input unit and output unit (I1, I2; O1, O2) for communicating with at least one further control (S1, S2, S); and
a processor unit (RE) for recognizing an identifier (A, C, B) of the further control (S1, S2, S) and for setting up a transmission connection (101 - 106) to the further control (S1, S2, S), wherein the processor unit (RE) sets up an identifier pair (A:C, C:A, A:B, B:A, B:C, C:B) for the transmission connection (101 - 106) from its own identifier (A, C, B) and the identifier (A, C, B) of the further control (S1, S2, S) and stores the set up identifier pair (A:C, C:A, A:B, B:A, B:C, C:B) in a memory unit; and wherein the processor unit (RE) is provided for activating or deactivating the transmission connection (101 - 106) to the further control (S1, S2, S) during an operation of the network.

10. The control (S1, S2, S) in accordance with claim 9, wherein the control (S1, S2, S) is connectable to an Ethernet-based switch (Sw) and can be connected to the control (S1, S2, S) via the switch (Sw).

11. The control (S1, S2, S) in accordance with claim 9, wherein the processor unit (RE) communicates a readiness to activate the transmission connection (101 - 106) after the setting up thereof or a readiness to deactivate the transmission connection (101 - 106) to the other control (S1, S2, S).

## Revendications

1. Procédé d'insertion d'une commande (S) dans un réseau d'au moins une première et seconde commandes (S1, S2) prévues pour faire fonctionner des actionneurs (R, St), pendant le fonctionnement du réseau, dans lequel les première et seconde commandes (S1, S2) sont connectées l'une à l'autre en une ligne de communication (100) et sont en communication l'une avec l'autre via une première connexion d'émission (101) de la première commande (S1) et via une seconde connexion d'émission (102) de la seconde commande (S2), et chaque commande (S1, S2, S) présente un identifiant univoque (A, C, B), comprenant les étapes suivantes consistant à :
prévoir une troisième connexion d'émission (103) et une quatrième connexion d'émission (104) entre la commande à insérer (S) et la première commande (S1) à agencer an amont de la commande à insérer (S), prévoir une cinquième connexion d'émission (105) et une sixième connexion d'émission (106) entre la commande à insérer (S) et la seconde commande (S2) à agencer en aval de la commande à insérer (S), et
activer les troisième à sixième connexions d'émission (103 - 106) entre les première et seconde commandes et la commande à insérer (S1, S2, S) lors de la désactivation simultanée des première et seconde connexions d'émission (101, 102) entre les première et seconde commandes (S1, S2).

2. Procédé selon la revendication 1, dans lequel on définit des troisième et quatrième paires d'identifiants (A:B, B:A) pour les connexions d'émission (103, 104) entre la commande à insérer (S) et la première commande (S1), à partir des identifiants respectifs (A, B) de la commande à insérer et de la première commande (S, S1).

3. Procédé selon la revendication 2, dans lequel on mémorise les troisième et quatrième paires d'identifiants (A:B, B:A) dans la commande à insérer et dans la première commande (S, S1).

4. Procédé selon l'une des revendications précédentes 1 à 3, dans lequel on définit des cinquième et sixième paires d'identifiants (B:C, C:B) pour les connexions d'émission (105, 106) entre la commande à insérer (S) et la seconde commande (S2), à partir des identifiants respectifs (B, C) de la commande à insérer et de la seconde commande (S, S2).

5. Procédé selon la revendication 4, dans lequel on mémorise les cinquième et sixième paires d'identifiants (B:C, C:B) dans la commande à insérer et dans la seconde commande (S, S2).

6. Procédé d'enlèvement d'une commande (S) hors d'un réseau d'au moins une première et seconde commandes (S1, S2) et de la commande à enlever (S), prévues pour faire fonctionner des actionneurs (R, St), pendant le fonctionnement du réseau, dans lequel
les commandes (S1, S2, S) sont connectées les unes aux autres en une ligne de communication (100), la commande à enlever (S) est agencée entre les première et seconde commandes (S1, S2), la première commande (S1) est connectée à la commande à enlever (S) via une troisième connexion d'émission (103), la commande à enlever (S) est connectée à la première commande (S1) via une quatrième connexion d'émission (104) et est connectée à la seconde commande (S2) via une cinquième connexion d'émission (105), et la seconde commande (S2) est connectée à la commande à enlever (S) via une sixième connexion d'émission (106), et chaque commande (S1, S2, S) présente un identifiant univoque (A, C, B), comprenant les étapes suivantes consistant à :
prévoir une première connexion d'émission (101) et une seconde connexion d'émission (102) entre les première et seconde commandes (S1, S2), et
activer les première et seconde connexions d'émission (101, 102) entre les première et seconde commandes (S1, S2) lors de la désactivation simultanée des troisième à sixième connexions d'émission (103 - 106) entre la commande à enlever (S) et la première commande (S1) agencée en amont de la commande à enlever (S) et la seconde commande (S2) agencée en aval de la commande à enlever (S).

7. Procédé selon la revendication 6, dans lequel on définit des première et seconde paires d'identifiants (A:C, C:A) pour les première et seconde connexions d'émission (101, 102) à partir des identifiants respectifs (A, C) des première et seconde commandes (S1, S2).

8. Procédé selon la revendication 7, dans lequel on mémorise les première et la seconde paires d'identifiants (A:C, C:A) dans les première et seconde commandes (S1, S2).

9. Commande (S1, S2, S) pour mettre en oeuvre le procédé selon l'une des revendications 1 à 8, la commande (S1, S2, S) étant apte à être insérée ou enlevée dans un réseau de commandes (S1, S2, S), comportant :
une unité d'entrée et de sortie (I1, I2 ; O1, O2) pour communiquer avec au moins une autre commande (S1, S2, S), et
une unité de calcul (RE) pour reconnaître un identifiant (A, C, B) de l'autre commande (S1, S2, S) et pour réaliser une connexion d'émission (101 - 106) avec une autre commande (S1, S2, S),
dans laquelle l'unité de calcul (RE) génère une paire d'identifiants (A:C, C:A, A:B, B:A, B:C, C:B) à partir d'un propre identifiant (A, C, B) et l'identifiant (A, C, B) de l'autre commande (S1, S2, S) pour la connexion d'émission (101 - 106) et mémorise la paire d'identifiants générée (A:C, C:A, A:B, B:A, B:C, C:B) dans une unité de mémorisation,
et l'unité de calcul (RE) est prévue pour activer ou désactiver la connexion d'émission (101 - 106) à l'autre commande (S1, S2, S) pendant le fonctionnement du réseau.

10. Commande (S1, S2, S) selon la revendication 9, la commande (S1, S2, S) étant apte à être raccordée à un commutateur réseau (switch) (Sw) basé sur Ethernet et étant apte à être connectée à l'autre commande (S1, S2, S) via le commutateur réseau (Sw).

11. Commande (S1, S2, S) selon la revendication 9 ou 10, dans laquelle l'unité de calcul (RE) communique une disponibilité à l'activation des connexions d'émission (101 - 106) après avoir réalisé celles-ci ou communique une disponibilité à la désactivation des connexions d'émission (101 - 106) à l'autre commande (S1, S2, S).
